(19) 

**Europäisches Patentamt**

**European Patent Office**

**Office européen des brevets**

(11) **EP 4 737 934 A1**

(12) **EUROPEAN PATENT APPLICATION**

(43) Date of publication:
06.05.2026 Bulletin 2026/19

(21) Application number: 25202941.8

(22) Date of filing: 18.09.2025

(51) International Patent Classification (IPC):
$G01S\ 7/00^{(2006.01)}$     $G01S\ 7/288^{(2006.01)}$
$G01S\ 7/41^{(2006.01)}$     $G01S\ 13/00^{(2006.01)}$
$G01S\ 13/50^{(2006.01)}$     $G01S\ 13/76^{(2006.01)}$
$G01S\ 13/931^{(2020.01)}$

(52) Cooperative Patent Classification (CPC):
G01S 7/006; G01S 7/288; G01S 7/2883;
G01S 7/415; G01S 13/003; G01S 13/50;
G01S 13/765; G01S 13/931; G01S 2013/9316

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.10.2024 IN 202421083424

(71) Applicant: Tata Consultancy Services Limited
Maharashtra (IN)

(72) Inventors:
• SURESH, Sweta
560066 Bangalore, Karnataka (IN)
• KUMAR, Achanna Anil
560066 Bangalore, Karnataka (IN)
• KRISHNAMURTHY, Giridhar
603103 Chennai, Tamil-Nadu (IN)

(74) Representative: Goddar, Heinz J.
Boehmert & Boehmert
Anwaltspartnerschaft mbB
Pettenkoferstrasse 22
80336 München (DE)

(54) **SYSTEM AND METHOD FOR ESTIMATING FRACTIONAL BIN SHIFTS IN ISAC WITH MULTISTATIC RADAR**

(57) Existing approaches for estimating delay-doppler values in an Integrated Sensing and Communication (ISAC) system with multistatic radar receivers have the disadvantage that they are estimating integer bin shifts and require separate estimation of delay and doppler values, requiring additional steps of computationally demanding data association and distinguishing the signal from different transmitters. Embodiments disclosed herein provide a method and system for estimating fractional bin shifts in ISAC with multistatic radar. In this approach, the system estimates paired fractional delay-doppler bin shifts by utilizing one or more phase information and a dictionary matrix, and computing the cross correlation of a at least one received signal and the associated transmitted signal. Cross correlation is utilized for identifying the one or more transmitters with respect to at least one transmitted signal.

FIG. 2

EP 4 737 934 A1

**Description**

CROSS-REFERENCE TO RELATED APPLICATIONS AND PRIORITY

The present application claims priority from Indian application no. 202421083424, filed on October 30, 2024.

TECHNICAL FIELD

The disclosure herein generally relates to, telecommunication, and, more particularly, to a system and method for estimating fractional bin shifts in Information Sharing and Analysis Center (ISAC) with a multistatic radar.

BACKGROUND

In recent times, there has been a huge surge in research related to advanced communication systems due to its performance in using higher frequency and efficiency in communication systems such as intelligent transportation systems for smart traffic control, autonomous vehicles, and so on. The next generation communication system uses Integrated Sensing and Communication system (ISAC), that aims to develop a single hardware system which processes both radar and communications and is beneficiary of both. ISAC system uses the same communication waveform for communicating with the receiver as well as for detecting the target. Earlier the Orthogonal Frequency Division multiplexing (OFDM) waveforms were used in ISAC, however, it was unable to retain its orthogonality and suffered a loss in performance due to high-speed vehicle communication. The Orthogonal Time Frequency Space (OTFS) was later introduced to deal with such problems. The OTFS channel in delay-Doppler domain (DD) gives the ability to work well in high doppler channels. The existing system fails in accurate estimation of fraction DD bin shifts. Most of the existing systems are used for computing integer values of DD bin shifts which results inaccurate target detection. The existing system computes the delay and doppler parameters in different iterations, which may cause an increase in computation time and add inaccuracy in target detection. Further and most of the systems are dependent on the shape/design of the pilots which makes the system to be dependent on the respective shape/design of the pilots. The existing system would not be able to distinguish between the different signals transmitted from the number of transmitters in high doppler channels.

SUMMARY

Embodiments of the present disclosure present technological improvements as solutions to one or more of the above-mentioned technical problems recognized by the inventors in conventional systems. For example, in one embodiment, a method for estimating fractional bin shifts in ISAC with multistatic radar is provided. The method includes: receiving, via one or more hardware processors, at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data; demodulating, via the one or more hardware processors, the at least one signal to obtain a delay Doppler domain frame; extracting, via the one or more hardware processors, the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets; determining, via the one or more hardware processors, a cross correlation of the received at least one signal and an associated transmitted signal by using the extracted one or more pilot sequences and a local version of a pilot sequence from each of the one or more transmitters; transforming, via the one or more hardware processors, the cross correlation of the received at least one signal and the associated transmitted signal to a frequency domain from the delay-doppler domain frame by performing a signal processing on the demodulated at least one signal, to obtain a transformed cross correlation of the received at least one signal and an associated transformed cross correlation of the transmitted signal; computing, via the one or more hardware processors, a plurality of phase information of the received at least one signal using the transformed cross correlation of the received at least one signal and the associated transformed cross correlation of the transmitted signal; constructing, via the one or more hardware processors, a dictionary matrix by selecting a plurality of predefined delay-doppler values computed using a 2D complex exponential signal technique; estimating, via the one or more hardware processors, one or more sparse vectors by solving a sparse recovery problem using the dictionary matrix and the plurality of phase information, wherein an estimation algorithm is used for solving the sparse recovery problem; and estimating, via the one or more hardware processors, one or more paired delay-doppler bin shifts with respect to at least one of the one or more targets by identifying one or more non-zero values of the one or more sparse vectors.

In an embodiment of the method, wherein, the received at least one signal comprising the one or more pilot sequences and the one or more guard symbols is placed in the delay doppler domain frame as a plurality of row and column pilot structures; the one or more communication data are placed in the M*N matrix after the one or more pilot sequences and the one or more guard symbols; and wherein the at least one signal is transmitted from the one or more transmitters by converting the delay-Doppler domain frame to the delay-time domain frame by performing a signal modulation on the delay-Doppler domain frame and by adding a cyclic prefix to at least one signal in the delay-time domain frame followed by a column-wise vectorization.

In an embodiment of the method, wherein converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)} F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame, and $F_N$ is a N dimensional Discrete Fourier Transform matrix.

In another embodiment of the method, wherein the at least one signal from each of the one or more transmitters is distinguished by determining the cross correlation of the received at least one signal and the associated transmitted signal with the local version of the pilot sequence from each of the one or more transmitters, and is represented as:

$$\sum\nolimits^{Y^{(r)}, p^{(t)}},$$

where, $Y^{(r)}$ is the received at least one signal at $r^{th}$ receiver in the delay-Doppler domain frame and $p^{(t)}$ is a transmitted pilot signal.

In another embodiment of the method, wherein computing the plurality of phase information of the received at least one signal comprises of dividing the transformed cross correlation of the received at least one signal with the transformed cross correlation of an associated transmitted signal, and is represented as:

$$\sum\nolimits_{u,v}^{Y(\tilde{r}), p(t)} = \sum_{l=1}^{L} \sum_{t=1}^{T} a_l \, e^{-j2\pi\left(\frac{u\tau_{l,bin}}{M_G} + \frac{v\mu_{l,bin}}{N}\right)} \sum\nolimits_{u,v}^{X_{\tau,\mu}^{(\tilde{t})}, p(t)} + \eta^\sim,$$

$$H_{u,v} = \sum_{l=1}^{L} \sum_{t=1}^{T} a_{\tau l, \mu_l} \, e^{-j2\pi\left(\frac{u\tau_{l,bin}}{M_G} + \frac{v\mu_{l,bin}}{N}\right)} + \eta^\sim,$$

where, $Y(\tilde{r})$ is the 2D-FFT of the extracted received signal in delay doppler (DD) domain, $a_{\tau l, \mu l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $H_{u,v}$ is the plurality of phase information, $\sum\nolimits_{u,v}^{X_{\tau,\mu}^{(\tilde{t})}, p(t)}$ is the corelated signal between an extracted transmitted signal ($X_{\tau,\mu}^{(\tilde{t})}$) and (p(t)) the transmitted pilot signal, $\eta^\sim$ denotes a residual noise present in the received at least one signal, $M_G$ represents only those delay bins specific to pilot and guard symbols and N denotes the number of doppler bins.

In another embodiment of the method, wherein estimating the one or more zero values of the one or more sparse vectors by comparing the plurality of columns of a dictionary matrix with the plurality of phase information using the estimation algorithm and identifying the one or more non-zero value of the one or more sparse vectors as paired delay-doppler shifts associated to the one or more targets is represented as:

$$u_{\tilde{s}} = \min_{u_s} \left\| u_s \right\|_{l_1} \; such \; that \; \left\| h - \phi u_s \right\|_{l_2} < \epsilon,$$

where, $h$ is the vectorised version of $H$, $u_s$ is the sparse vector with $L$ significant values, $l_1$ is the $l_1$ norm, $l_2$ is the $l_2$ norm, and $\varepsilon$ is the threshold used in the estimation algorithm.

In an embodiment, a system is provided. The system includes one or more hardware processors, a communication interface, and a memory storing a plurality of instructions. The plurality of instructions cause the one or more hardware processors to: receive at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data; demodulate the at least one signal to obtain a delay Doppler domain frame; extract the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets; determine a cross correlation of the received at least one signal and associated transmitted signal by using the extracted one or more pilot sequences and a local version of a pilot sequence from each of the one or more transmitters; transform the cross correlation of the received at least one signal and the associated transmitted signal to a frequency domain from the delay-doppler domain by performing a signal processing on the demodulated at least one signal, to obtain a transformed cross correlation of the received at least one signal and an associated transformed cross correlation of the transmitted signal; compute a plurality of phase information of the received at least one signal using the transformed cross correlation of the received at least one signal and the associated transformed cross correlation of the transmitted signal; construct a dictionary matrix by selecting a plurality of pre-defined delay-doppler values computed using a 2D complex exponential signal technique; estimate one or more sparse vectors by solving a sparse recovery problem using the dictionary matrix and the plurality of phase information, wherein an estimation algorithm is used for solving the sparse recovery problem; and estimate one or more paired delay-doppler bin shifts with respect to at least one of the one or more targets by identifying one or more non-zero values of the one or more sparse vectors.

In an embodiment of the system, wherein, the received at least one signal comprising the one or more pilot sequences and the one or more guard symbols is placed in the delay doppler domain frame as a plurality of row and column pilot structures; the one or more communication data are placed in the M*N matrix after the one or more pilot sequences and the one or more guard symbols; and wherein the at least one signal is transmitted from the one or more transmitters by converting the delay-Doppler domain frame to the delay-time domain frame by performing a signal modulation on the delay-Doppler domain frame and by adding a cyclic prefix to the at least one signal in the delay-time domain frame followed by column-wise vectorization.

In an embodiment of the system, wherein the one or more hardware processors are configured for converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)} F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame and $F_N$ is a N dimensional Discrete Fourier Transform matrix.

In an embodiment of the system, wherein the at least one signal from each of the one or more transmitters is distinguished by determining the cross correlation of the received at least one signal and the associated transmitted signal with the local version of the pilot sequence from each of the one or more transmitters, and is represented as:

$$\sum{}^{Y^{(r)}, p^{(t)}},$$

where, $Y^{(r)}$ is the received at least one signal at $r^{th}$ receiver in the delay-Doppler domain frame and $p^{(t)}$ is a transmitted pilot signal.

In an embodiment of the system, wherein the one or more hardware processors are configured for computing the plurality of phase information of the received at least one signal comprises of dividing the transformed cross correlation of the received at least one signal with the transformed cross correlation of an associated transmitted signal, and is represented as:

$$\sum{}_{u,v}^{Y(\tilde{r}), p(t)} = \sum_{l=1}^{L} \sum_{t=1}^{T} a_l \, e^{-j2\pi\left(\frac{u\tau_{l,bin}}{M_G} + \frac{v\mu_{l,bin}}{N}\right)} \sum{}_{u,v}^{X_{\tau,\mu}^{(\tilde{t})}, p(t)} + \eta^{\sim},$$

$$H_{u,v} = \sum_{l=1}^{L} \sum_{t=1}^{T} a_{\tau l, \mu_l} \, e^{-j2\pi\left(\frac{u\tau_{l,bin}}{M_G} + \frac{v\mu_{l,bin}}{N}\right)} + \eta^{\sim},$$

where, $Y(\tilde{r})$ is the 2D-FFT of the extracted received signal in delay doppler (DD) domain, $a_{\tau l, \mu_l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $H_{u,v}$ is the plurality of phase information, $\sum{}_{u,v}^{X_{\tau,\mu}^{(\tilde{t})}, p(t)}$ is the corelated signal between an extracted transmitted signal ($X_{\tau,\mu}^{(\tilde{t})}$) and (p(t)) id the transmitted pilot signal, $\eta^{\sim}$ denotes a residual noise present in the received at least one signal, $M_G$ represents only those delay bins specific to pilot and guard symbols and N denotes the number of doppler bins.

In an embodiment of the system, wherein the one or more hardware processors are configured for estimating the one or more zero values of the one or more sparse vectors by comparing the plurality of columns of a dictionary matrix with the plurality of phase information using the estimation algorithm and identifying the one or more non-zero value of the one or more sparse vectors as paired delay-doppler shifts associated to the one or more targets is represented as:

$$\tilde{u_s} = \min_{u_s}\left\|u_s\right\|_{l_1} \; such \; that \; \left\|h - \phi u_s\right\|_{l_2} < \epsilon,$$

where, h is the vectorised version of H, $u_s$ is the sparse vector with L significant values, $l_1$ is the $l_1$ norm, $l_2$ is the $l_2$ norm, and $\varepsilon$ is the threshold used in the estimation algorithm.

In yet another aspect, there are provided one or more non-transitory machine-readable information storage mediums comprising one or more instructions which when executed by one or more hardware processors cause: receive at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data; demodulate the at least one signal to obtain a delay Doppler domain frame; extract the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets; determine a cross correlation of the received at least one signal and associated transmitted signal by using the extracted one or more pilot sequences and a local version of a pilot sequence from each of the one or more transmitters; transform the cross correlation of the received at least one signal and the associated transmitted signal to a frequency domain from the delay-doppler domain by performing a signal processing on the demodulated at least one signal, to obtain a transformed cross correlation of the received at least one signal and an associated transformed cross correlation of the transmitted signal; compute a plurality of phase information of the received at least one signal using the transformed cross correlation of the received at least one signal and the associated transformed cross correlation of the transmitted signal; construct a dictionary matrix by selecting a plurality of pre-defined delay-doppler values computed using a 2D complex exponential signal technique; estimate one or more sparse vectors by solving a sparse recovery problem using the dictionary matrix and the plurality of phase information, wherein an estimation algorithm is used for solving the sparse recovery problem; and estimate one or more paired delay-doppler bin shifts with respect to at least one of the one or more targets by identifying one or more non-zero values of the one or more sparse vectors.

In an embodiment of the non-transitory computer readable medium, wherein, the received at least one signal comprising the one or more pilot sequences and the one or more guard symbols is placed in the delay doppler domain frame as a plurality of row and column pilot structures; the one or more communication data are placed in the M*N matrix after the one or more pilot sequences and the one or more guard symbols; and wherein the at least one signal is transmitted from the one or more transmitters by converting the delay-Doppler domain frame to the delay-time domain frame by performing a signal modulation on the delay-Doppler domain frame and by adding a cyclic prefix to the at least one signal in the delay-time domain frame followed by column-wise vectorization.

In an embodiment of the non-transitory computer readable medium, wherein converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)}F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame and $F_N$ is a N dimensional Discrete Fourier Transform matrix.

In another embodiment of the non-transitory computer readable medium, wherein the at least one signal from each of the one or more transmitters is distinguished by determining the cross correlation of the received at least one signal and the associated transmitted signal with the local version of the pilot sequence from each of the one or more transmitters, and is represented as:

$$\sum{}^{Y^{(r)},p^{(t)}},$$

where, $Y^{(r)}$ is the received at least one signal at $r^{th}$ receiver in the delay-Doppler domain frame and $p^{(t)}$ is a transmitted pilot signal

In another embodiment of the non-transitory computer readable medium, wherein computing the plurality of phase information of the received at least one signal comprises of dividing the transformed cross correlation of the received at least one signal with the transformed cross correlation of an associated transmitted signal, and is represented as:

$$\sum_{u,v}^{Y(r^\sim),p(t)} \;=\; \sum_{l=1}^{L} \sum_{t=1}^{T} a_l \, e^{-j2\pi \left( \frac{u\tau_{l,bin}}{M_G} + \frac{v\mu_{l,bin}}{N} \right)} \sum_{u,v}^{X_{\tau,\mu}^{(t^\sim)},p(t)} \;+\; \eta^\sim,$$

$$H_{u,v} \;=\; \sum_{l=1}^{L} \sum_{t=1}^{T} a_{\tau l,\mu_l} \, e^{-j2\pi \left( \frac{u\tau_{l,bin}}{M_G} + \frac{v\mu_{l,bin}}{N} \right)} + \eta^\sim,$$

where, $Y(r^\sim)$ is the 2D-FFT of the extracted received signal in delay doppler (DD) domain, $a_{\tau l,\mu_l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $H_{u,v}$ is the plurality of phase information, $\sum_{u,v}^{X_{\tau,\mu}^{(t^\sim)},p(t)}$ is the corelated signal between an extracted transmitted signal ( $X_{\tau,\mu}^{(t^\sim)}$ ) and $(p(t))$ is the transmitted pilot signal, $\eta^\sim$ denotes the a residual noise present in the received at least one signal, $M_G$ represents only those delay bins specific to pilot and guard symbols and N denotes the number of doppler bins.

In another embodiment of the non-transitory computer readable medium, wherein estimating the one or more zero values of the one or more sparse vectors by comparing the plurality of columns of a dictionary matrix with the plurality of phase information using the estimation algorithm and identifying the one or more non-zero value of the one or more sparse vectors value as paired delay-doppler shifts associated to the one or more targets is represented as:

$$u_{\tilde{s}} \;=\; \min_{u_s} \big\| u_s \big\|_{l_1} \; such\ that \; \big\| h - \phi u_s \big\|_{l_2} < \epsilon,$$

where, h is the vectorised version of $H$, $u_s$ is the sparse vector with $L$ significant values, $l_1$ is the $l_1$ norm, $l_2$ is the $l_2$ norm, and $\varepsilon$ is the threshold used in the estimation algorithm.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system to estimate fractional bin shifts in Information Sharing and Analysis Center (ISAC) with multistatic radar, according to some embodiments of the present disclosure.
FIG. 2 illustrates an exemplary implementation of the system of FIG. 1, in a road scenario, according to some embodiments of the present disclosure.
FIGS. 3A and 3B is a flow diagram illustrating a method to estimate the fractional bin shifts in ISAC with multistatic radar, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In a communication network, an Integrated Sensing and Communication System (ISAC) uses same communication waveform for communicating with a receiver as well as for detecting the target. Some of the previously existed approaches used Orthogonal Frequency Division multiplexing (OFDM) waveforms in ISAC, however, were unable to retain its orthogonality and therefore suffered a loss in performance due to high-speed vehicle communication. The Orthogonal Time Frequency Space (OTFS) was later introduced to deal with such problems, the OTFS channel in delay-Doppler domain (DD) which gives the ability to work well in high doppler channels. The existing system fails in accurate estimation of fraction DD bin shifts, wherein most of the existing systems are proposed for computing integer values of DD bin shifts which resulted in an inaccurate target detection. The existing system computes the delay and doppler parameters in different iterations, and this involves increase in computation time and inaccurate in target detection and most of the systems are dependent on the shape/design of the pilots which makes the system to be dependent on the respective shape/design of the pilots. The existing system would not be able to distinguish between the different signals transmitted from the number of transmitters in high doppler channels. To address these challenges, embodiments disclosed herein provide a fractional bin shift estimation approach which involves the following steps. Initially, at least one signal reflected from one or more targets in a delay-time domain frame is received at a radar receiver, wherein the received at least one signal comprises a M*N matrix, and wherein the M*N matrix comprises one or more pilot sequences, one or more guard symbols, and one or more communication data. Further, a delay-doppler domain frame of the received at least one signal is obtained by demodulating the received at least one signal. Further, the one or more pilot sequences and the one or more guard symbols from the received at least one signal extracted, wherein the one or more pilot sequences and the one or more guard symbols are known at the radar receiver and one or more transmitters from where the at least one signal is transmitted towards the one or more targets. Further, a cross correlation of the received at least one signal and associated transmitted signal is determined by using the extracted one or more pilot sequences and a local version of a pilot sequence from each of the one or more transmitters. Further, the cross correlation of the received at least one signal and the associated transmitted signal transformed to a frequency domain from the delay-doppler domain by performing a signal processing on the demodulated at least one signal, to obtain a transformed cross correlation of the received at least one signal and an associated transformed cross correlation of the transmitted signal. Further, a plurality of phase information of the received at least one signal is computed using the transformed cross correlation of the received at least one signal and the associated transformed cross correlation of the transmitted signal. Further, a dictionary matrix is constructed by selecting a plurality of pre-defined delay-doppler values computed using a 2D complex exponential signal technique. Further, one or more sparse vectors are estimated by solving a sparse recovery problem using the dictionary matrix and the plurality of phase information, wherein an estimation algorithm is used for solving the sparse recovery problem. Then one or more paired delay-doppler bin shifts are estimated with respect to at least one of the one or more targets by identifying one or more non-zero values of the one or more sparse vectors. This approach estimates one or more paired delay-doppler bin shifts, utilizing the plurality of phase information for fraction estimation of paired delay-doppler bin shits, and cross correlation of the received at least one signal and associated transmitted signal are utilized for distinguishing the different signals from one or more transmitters.

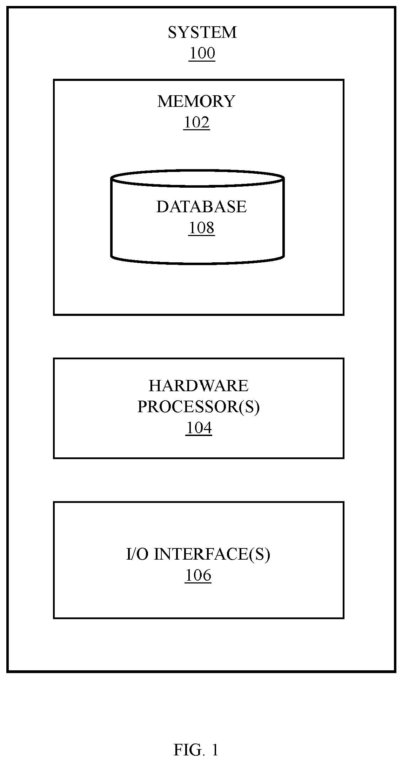

Referring now to the drawings, and more particularly to FIG. 1 through FIG. 3B, where similar reference characters denote corresponding features consistently throughout the figures, there are shown preferred embodiments, and these embodiments are described in the context of the following exemplary system and/or method.

FIG. 1 depicts an exemplary system 100 for estimating fractional bin shifts in ISAC with multistatic radar, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

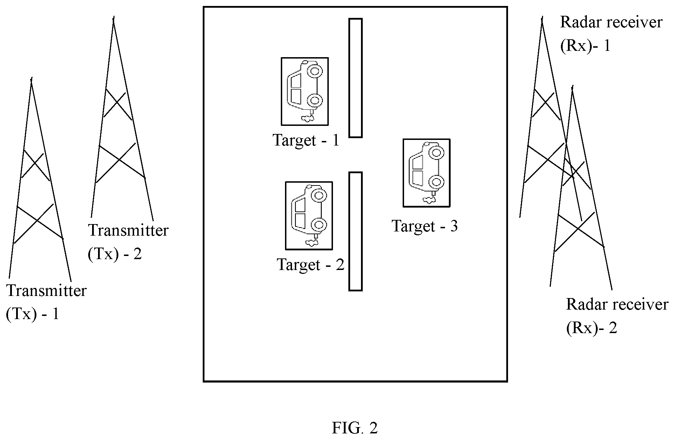

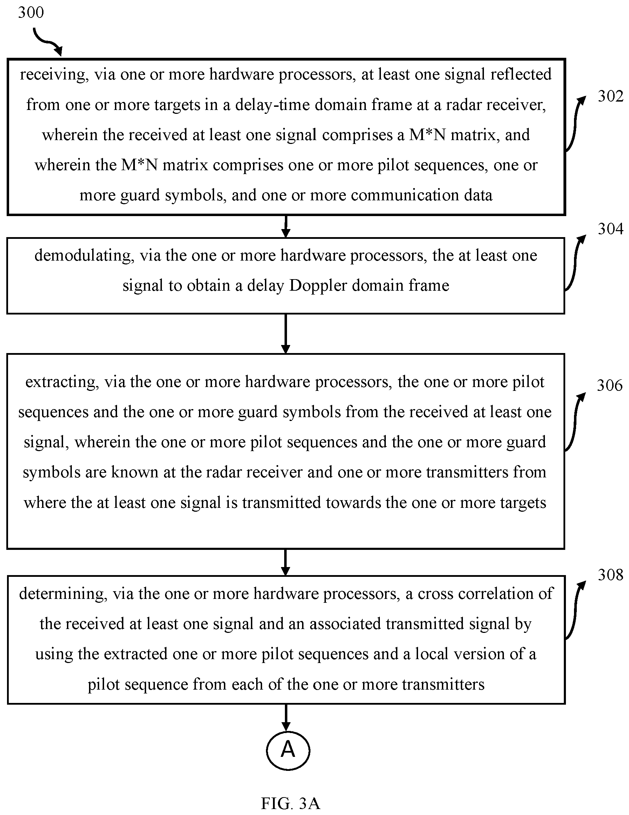

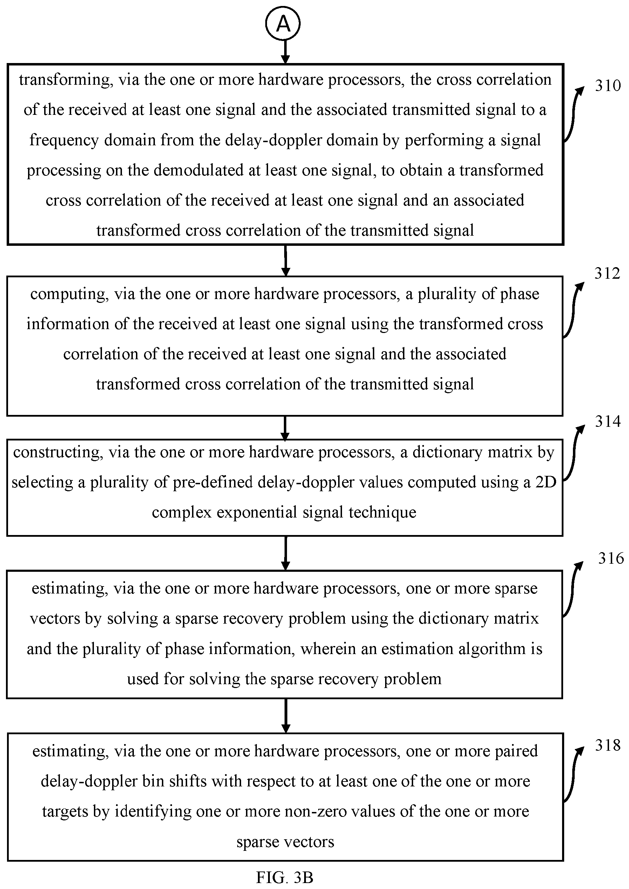

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with exemplary implementation of the system of FIG. 1, in a road scenario illustrated in FIG. 2 and flow diagram depicted in FIG. 3A and FIG. 3B, and to estimating fractional bin shifts in ISAC with multistatic radar.

FIG.2 illustrates an exemplary road scenario comprising ISAC assisted communication system according to some embodiments of the present disclosure. Communication between a multi-transmitter to one or more target to a multi-radar receiver in ISAC system is depicted. In various example embodiments, the multi-transmitter (Tranmitter (Tx) - 1 and Transmitter (Tx) -2) is a transmitter transmitting at least one signal. The one or more targets (Target -1, Target -2, and Target-3) are the receivers of the transmitted at least one signal. Each of the one or more targets is moving at a maximum velocity, the part of the transmitted at least one signal is reflected after having a first communication with the target. The multi-radar receiver (Radar receiver (Rx) -1 and Radar receiver (Rx) -2) receives the reflected at least one signal from the moving targets. The multi-radar receiver computes the paired delay-doppler bin shifts for fast moving target localization. High speed target detection and localization becomes difficult as the transmitted signal in various channels suffers a loss in performance and would be unable to retain the signal orthogonality. The paired delay-doppler bin shifts are estimated as one or more non-zero values of the one or more sparse vectors. The one or more sparse vectors are the results of comparison between the dictionary matrix and the plurality of the phase information. For example, Orthogonal frequency division multiplexing (OFDM) waveforms are used for ISAC system, where it fails in high-speed vehicle communication as it faces the above stated problems. The system 100 and method 200 of the present disclosure use Orthogonal Time Frequency Space (OTFS) to overcome such problems.

FIGS. 3A and 3B is a flow diagram illustrating a method 300 for estimating fractional bin shifts in ISAC with multistatic radar, according to some embodiments of the present disclosure. In an embodiment, the system 100 comprises one or more data storage devices or the memory 102 operatively coupled to the processor(s) 104 and is configured to store instructions for execution of steps of the method 300 depicted in FIG. 3A and FIG. 3B by the processor(s) or the one or more hardware processors 104. The steps of the method of the present disclosure will now be explained with reference to the components or blocks of the system 100 as depicted in FIG. 1, and the example implementation of the system 100 as depicted in FIG. 2,. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 302 of the method 300, the system 100 receives, via a radar receiver Rx executed by the one or more hardware processors 104, at least one signal reflected from one or more targets in a delay-time domain frame. The received at least one signal comprises a M*N matrix wherein the M*N matrix comprises one or more pilot sequences, one or more guard symbols, and one or more communication data. The received at least one signal comprising the one or more pilot sequences and the one or more guard symbols is placed in a plurality of row and column pilot structures of a delay doppler domain frame. The one or more communication data are placed in the M*N matrix after the one or more pilot sequences and the one or more guard symbols. In an embodiment the received at least one signal comprises communication data such as voice or text or multimedia data may be placed in the M*N matrix after the one or more pilot sequences and the one or more guard symbols. The delay doppler domain is represented as $X \in C^{M*N}$, is the at least one signal in delay doppler domain and $C^{M*N}$ represents the one or more communication data is placed in the M*N matrix after the one or more pilot sequences and the one or more guard symbols. The at least one signal is transmitted from the one or more transmitters *Tx* by converting the delay-Doppler domain frame to the delay-time domain frame (*S*). The delay-Doppler domain frame is modulated by adding a cyclic prefix to the at least one signal in the delay-time domain frame followed by column-wise vectorization. The at least one signal is transmitted from the one or more transmitters Tx in the delay-time domain frame through a radar channel. For example, *L* targets on road and with removal of static clutter, the radar channel in delay-doppler domain frame is represented as:

$h(\tau, \mu) = \sum_{l=0}^{L} \sum_{t=0}^{T} a_l \, \delta(\tau - \tau_{l,bin}) \delta(\mu - \mu_{l,bin})$ , where $a_l$, $\tau_{l,bin}$, and $\mu_{l,bin}$ are the gain, delay bin shift and doppler bin shift produced by the $l^{th}$ target to the transmitted signal respectively and $\delta(.)$ is the Dirac delta function. The at least one signal transmitted in delay-time frame from the one or more transmitters *Tx* is represented as:

$$s = (F_N^H \otimes I_M)x \qquad --- (1)$$

where, *s* represents signal in delay-time frame, $F_N^H$ is the *H* and *N* dimensional Discrete Fourier Transform matrix, *x* is the vectorized form of *X*, $\otimes$ Kronecker product and $I_M$ is identity matrix of dimension *M*.

Further, at step 304 of the method 300, the radar receiver Rx demodulates, via the one or more hardware processors 104, the at least one signal to obtain a delay-doppler domain frame. The received at least one signal from the delay-time domain frame is converted to the delay-doppler frame by removing the cyclic prefix from the received at least one signal and the at least one signal is demodulated to obtain the received at least one signal in delay-doppler frame, which is represented as:

$$Y^{(r)} = R^{(r)} F_N \quad \text{--- (2)}$$

where, $Y^{(r)}$ is the received at least one signal at $r^{th}$ receiver in the delay-Doppler domain frame, $R^{(r)}$ is the at least one signal received at the $r^{th}$ receiver in the delay-time domain frame and $F_N$ is the $N$ dimensional Discrete Fourier Transform matrix.

In an embodiment, let transmitted signal from $t^{th}$ transmitter be $X_{\tau,\mu}^{(t)} \in C^{M_G * N}$, where $M_G$ represents only those delay bins specific to pilot and guard symbols. In the presence of $L$ targets that incur a delay of $\tau_l$ and a doppler $\mu_l$, the generalized received at least one signal at the $r^{th}$ may be represented as:

$$Y_{\tau,\mu}^{(r)} = \sum_{t=0}^{T} \sum_{l=0}^{L} a_l \, X_{\tau - \tau_{l,bin}, \mu - \mu_{l,bin}}^{(t)} + \eta \qquad \text{--- (3)}$$

where $a_l$ denotes the gain associated with the path corresponding to the $l^{th}$ target, $\eta$ *is a set of N(0, $\sigma^2$) represents the* complex Gaussian noise with mean zero and variance $\sigma^2$, $\tau_l$ represents delay and $\mu_l$ represent doppler.

Further, at step 306 of the method 300, the radar receiver Rx extracts, via the one or more hardware processors 104, the one or more pilot sequences and the one or more guard symbols from the received at least one signal. For example, only the one or more pilot sequence and the one or more guard symbols are extracted. The one or more pilot sequences and the one or more guard symbols are known at the radar receiver and one or more transmitters from where the at least one signal is transmitted towards the one or more targets.

Further, at step 308 of the method 300, the radar receiver Rx determines, via the one or more hardware processors 104, a cross correlation of the received at least one signal and associated transmitted signal by using the extracted one or more pilot sequences and a local copy of pilot sequence from each of the one or more transmitters. The received at least one signal comprises signal reflected from the one or more targets. The cross correlation represents the similarity between signal reflected from the one or more targets and associated transmitted signal from the one or more transmitters. The cross correlation is determined by analyzing a peaks of the received at least one signal and associated transmitted signal, the received at least one signal and associated transmitted signal having highest peak are determined as cross correlated received at least one signal and associated transmitted signal. In an embodiment, the cross correlation of the received at least one signal and associated transmitted signal is utilized for distinguishing between the at least one signal transmitted from each of the one or more transmitters. The cross correlation of the received at least one signal and associated transmitted signal is represented as:

$$\sum^{Y^{(r)}, p^{(t)}} \quad \text{--- (4)}$$

where, $Y^{(r)}$ is the received at least one signal at $r^{th}$ receiver in the delay-Doppler domain frame and $p^{(t)}$ is a transmitted pilot signal.

Further, at step 310 of the method 300, the radar receiver Rx transforms, via the one or more hardware processors 104, the cross correlation of the received at least one signal and the associated transmitted signal to a frequency domain from the delay-doppler domain frame by performing a signal processing. The transformed cross correlation of the received at least one signal and the associated transmitted signal is represented as:

$$\sum_{u,v}^{Y(\tilde{r}), p(t)} = \sum_{l=1}^{L} \sum_{t=1}^{T} a_l \, e^{-j2\pi \left( \frac{u\tau_{l,bin}}{M_G} + \frac{v\mu_{l,bin}}{N} \right)} \sum_{u,v}^{X_{\tau,\mu}^{(\tilde{t})}, p(t)} + \tilde{\eta} \quad \text{--- (5)}$$

where, $Y(\tilde{r})$ is the transform of the extracted received signal in delay doppler domain, $a_{\tau l, \mu l}$ is the path gain of $l^{th}$ path, $\mu_{l,bin}$ is the doppler bin shift of the $l^{th}$ path, $\tau_{l,bin}$ is the delay bin shift of the $l^{th}$ path, $T$ being the number of transmitters, $L$ being the number of paths, $M_G$ represents only those delay bins specific to pilot and guard symbols, $N$ denotes the number of doppler bins, $\sum_{u,v}^{X_{\tau,\mu}^{(\tilde{t})}, p(t)}$ is the corelated signal between extracted transmitted signal ( $X_{\tau,\mu}^{(\tilde{t})}$ ) and ($p(t)$) the transmitted pilot signal and $\tilde{\eta}$ denotes the residual noise present in the received signal.

Further, at step 312 of the method 300, the radar receiver Rx computes, via the one or more hardware processors 104, a plurality of phase information of the received at least one signal using the transformed cross correlation of the received at least one signal and the associated transformed cross correlation of the transmitted signal. The plurality of phase information is computed by dividing the transformed cross correlation of the received at least one signal with the transformed cross correlation of the associated transmitted signal, and is represented as:

$$H_{u,v} = \sum_{t=1}^{T} \sum_{l=1}^{L} a_{\tau l, \mu l}\, e^{-j2\pi\left(\frac{u\tau_{l,bin}}{M_G} + \frac{v\mu_{l,bin}}{N}\right)} + \tilde{\eta} \quad --- (6)$$

where, $H_{u,v}$ is the phase information, $\tilde{\eta}$ denotes the residual noise present in the received signal, $a_{\tau l, \mu l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $M_G$ represents only those delay bins specific to pilot and guard symbols and N denotes the number of doppler bins.

Further, at step 314 of the method 300, the radar receiver Rx constructs, via the one or more hardware processors 104, a dictionary matrix $\phi$ of size $M_G N * M_\tau N_\mu$, using a predefined paired delay and doppler bin shifts. Here, $M_\tau$, $N_\mu$ denotes the cardinality of the sets delay $\tau = \tau_{low}, \tau_{low} + \tau_{res,....,}\tau_{high}\}$ and doppler $\mu = \{\mu_{low}, \mu_{low} + \mu_{res,....,}\mu_{high}\} + \mu_{res,....,}\mu_{high}\}$ respectively. Each of a plurality of columns of the dictionary matrix $\phi$ is created by selecting a plurality of pre-defined paired delay-doppler values computed using a 2D complex exponential signal technique, wherein computed pre-defined paired delay-doppler values sub set $\tau \subset \tau_s$ and $\mu \subset \mu_s$ is utilized for constructing the dictionary matrix $\phi$, and the sub set of paired delay-doppler value selection leads to reduction in dictionary matrix size $\phi$ and lesser computation time. The dictionary matrix $\phi$ of size $M_G N * M_\tau N_\mu$ is represented as:

$$\phi_{u,v} = \sum_{l=1}^{L} \sum_{t=1}^{T} e^{-j2\pi\left(\frac{u\tau_{l,bin}}{M_G} + \frac{v\mu_{l,bin}}{N}\right)} \quad --- (7)$$

where, $\phi_{u,v}$ represents a plurality of column of dictionary matrix $\phi$ constructed using 2D complex exponential signal technique, $\mu_{l,bin}$ is the Doppler bin shift of the $l^{th}$ path, $\tau_{l,bin}$ is the delay bin shift of the $l^{th}$ path, $M_G$ represents only those delay bins specific to pilot and guard symbols and N denotes the number of doppler bins.

$$\phi = \phi_\tau \otimes \phi_\mu \quad --- (8)$$

$$\phi_\tau = \left[ w_{M_G}^{\tau_{low}}, w_{M_G}^{\tau_{low}+\tau_{res}}, \ldots, w_{M_G}^{\tau_{high}} \right]$$

$$\phi_\mu = \left[ w_N^{\mu_{low}}, w_N^{\mu_{low}+\mu_{res}}, \ldots, w_N^{\mu_{high}} \right]$$

where, dictionary matrix $\phi$ is Kronecker product of the $\phi_\tau$ and $\phi_\mu$, $\phi_\tau$ denotes the delay values of the computed 2D complex exponential signal for delay set $\tau$, and $\phi_\mu$ denotes the doppler values of the computed 2D complex exponential signal technique for delay set $\mu$, with $\left[ w_{M_G}^{\tau_i} \right]_u = \left( e^{\frac{j2\pi}{M_G}} \right)^{\tau_i u}$ and $\left[ w_N^{\mu_j} \right]_v = \left( e^{\frac{j2\pi}{N}} \right)^{\mu_j v}$, $\left[ w_{M_G}^{\tau_i} \right]$ is 1D complex exponential matrix of $i^{th}$ delay value and $\left[ w_N^{\mu_j} \right]$ is 1D complex exponential matrix of $j^{th}$ doppler value, $M_G$ represents only those delay bins specific to pilot and guard symbols and N denotes the number of doppler bins.

Further, at step 316 of the method 300, the radar receiver Rx estimates, via the one or more hardware processors 104, one or more sparse vectors by solving the sparse recovery optimization problem using the dictionary matrix and the plurality of phase information. To compute one or more sparse vectors an estimation problem is defined as the sparse recovery optimization problem, and the sparse recovery problem is further solved using the dictionary matrix $\phi$ and the plurality of phase information. An estimation algorithm as known in the art is employed for solving the sparse recovery problem wherein the sparse recovery problem and estimation of sparse vector optimization is represented as:

$$h = \phi u_s \quad --- (9)$$

$$\tilde{u_s} = \min_{u_s} ||u_s||_{l_1} \; such \; that \, ||h - \phi u_s||_{l_2} < \epsilon \quad --- (10)$$

where, $h$ is the vectorised version of $H_{u,v}$ phase information, $\phi$ is dictionary matrix, $u_s$ denotes a sparse vector having $L$ significant channel gain values, $l_1$ is the $l_1$ norm, $l_2$ is the $l_2$ norm, and $\varepsilon$ is the threshold used in estimation algorithm.

Further, at step 318 of the method 300, the radar receiver Rx estimates, via the one or more hardware processors 104, one or more paired delay-doppler bin shifts with respect to at least one of the one or more targets by comparing the plurality of columns of the dictionary matrix $\phi$ with plurality of phase information and identifying one or more non-zero values of the one or more sparse vectors. In an embodiment, the non-zero values represent the presence of fractional paired delay-doppler bin shifts. The radar receiver uses paired delay-doppler bin shifts to localize the target. In an embodiment, the estimated paired delay-doppler bin shifts are fractional values which help to accurately estimate the target. The delay-doppler bin shifts estimation reduces the computation time by using the paired estimation of delay-doppler bin shifts.

Simulation results:

The simulation results carried out by the method 200 and the system 100 of the present disclosure demonstrate the target estimation performance utilizing the phase information based approach. An OTFS based multistatic Single Input Multiple Output (SIMO) radar receiver system, and a road-based scenario comprising the multiple transmitter, the one or more targets and the multiple radar receivers as depicted in FIG. 2 are considered for localizing the target. The system component details are provided in the Table 1, wherein the efficiency of the approach is tested by assuming Target 1, Target 2, and Target 3 moving simultaneously on the road with the maximum velocity considered to be 25 m/s., the maximum unambiguous range ($M_G \Delta R$) and the maximum velocity may be detected with the system parameters considered as 1.6 km and $V_{max} = \pm 4571$ m/s respectively. Accuracy of the estimate is measured by root mean squared error (RMSE) is represented as:

$$RMSE_p = \sqrt{\frac{1}{K} \sum_{k=1}^{K} (p - \hat{p})^2} \quad --- (11)$$

where, where $p$ and $\hat{p}$ the true and estimated values of the parameter respectively. Table 2 provides integer shift values for different resolutions, Table 3 and Table 4 provide comparison between True Values and Estimated values of paired delay-doppler values for different transmitters in multi radar receiver and multi targets scenario respectively.

Table 1

| M*N | $64 \times 48$ |
|---|---|
| Pilot sequence | Zadoff-Chu sequence |
| Subcarrier spacing, $\Delta f$ | 30 kHz |
| Center frequency, $f_c$ | 3 GHz |
| Bandwidth, B | 1.92 MHz |
| *Maximum Doppler frequency, fd, max* | $\pm 707$ Hz |
| Use equation macro and be conistentn *Noise Figure* | 3 dB |
| Gain of antenna | 0 dB |
| Number of trials (K) | 100 |
| Delay resolution ($\Delta\tau$) | 0.5 $\mu$s |
| Doppler resolution ($\Delta\mu$) | 625 Hz |
| Range resolution ($\Delta R$) | 78 m |
| Velocity resolution ($\Delta V$ ) | 95 m/s |
| $f_{d,res}$ | 100 Hz |

Table 2

| True delay values: [2,3] | | |
|---|---|---|
| True Doppler values: [1,2] | | |
| Signal to Noise Ration(SNR) = 20 dB | | |
| Resolution | Delay | Doppler |
| [1,1] | [2,3] | [1,2] |
| [0.5,0.5] | [2,3] | [1,2] |
| [0.1,0.1] | [2,3.1] | [1,2] |

(continued)

| True delay values: [2,3] | | |
| True Doppler values: [1,2] | | |
| Signal to Noise Ration(SNR) = 20 dB | | |
| Resolution | Delay | Doppler |
| [0.05,0.05] | [2,3.1] | [1,2] |
| [0.01,0.01] | [1.98,3.09] | [1,2] |

Table 3

| $Ntx$ = 2, $Nrx$ = 4, $Ntgt$ = 1, Resolution = [0.05,0.05], and Signal to Noise Ratio (SNR) = 20 dB | | |
|---|---|---|
| | True values | Estimated values |
| Tx1: Delay | [1.6215, 2.3334, 1.2703, 2.4913] | [1.65, 2.30, 1.20, 2.45] |
| Tx2: Delay | [2.7953, 2.5073, 2.4442, 3.6651] | [2.80, 2.55, 2.45, 3.70] |
| Tx1: Doppler | [-0.2167, -0.0036, -0.1144, -0.1619] | [-0.20, 0, -0.10, - 0.15] |
| Tx2: Doppler | [-0.2171, -0.0031, -0.1013, -0.1471] | [-0.15, 0, -0.10, - 0.10] |

Table 4

| $Ntx$ = 2, $Nrx$ = 1, $Ntgt$ = 2, Resolution = [0.05, 0.05], SNR = 20 dB | | |
|---|---|---|
| | True values | Estimated values |
| Delay | [1.6215, 2.7953, 1.8891, 2.3233] | [1.60, 3, 1.8, 2.7] |
| Doppler | [-0.2167, -0.2171, 0.0864, -0.1660] | [-0.15, -0.2, 0, - 0.15] |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problem of estimating fractional bin shifts in ISAC with multistatic radar. The embodiment thus provides a mechanism for paired delay-doppler fractional bin shift estimation for OTFS based ISAC system using the one or more phase information and the dictionary matrix. Moreover, the embodiments herein further provide a mechanism for distinguishing the different signals transmitted from the one or more transmitters by using the cross correlation of the received at least one signal and associated transmitted signal. Moreover, the embodiments herein further provide a mechanism for reducing the size of the dictionary matrix using the sub-sets of pre-defined delay and doppler values, which results in reducing the computation time.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

   receiving (302), via one or more hardware processors, at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data;

   demodulating (304), via the one or more hardware processors, the at least one signal to obtain a delay Doppler domain frame;

   extracting (306), via the one or more hardware processors, the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets;

   determining (308), via the one or more hardware processors, a cross correlation of the received at least one signal and an associated transmitted signal by using the extracted one or more pilot sequences and a local version of a pilot sequence from each of the one or more transmitters;

   transforming (310), via the one or more hardware processors, the cross correlation of the received at least one signal and the associated transmitted signal to a frequency domain from the delay-doppler domain frame by performing a signal processing on the demodulated at least one signal, to obtain a transformed cross correlation of the received at least one signal and an associated transformed cross correlation of the transmitted signal;

   computing (312), via the one or more hardware processors, a plurality of phase information of the received at least one signal using the transformed cross correlation of the received at least one signal and the associated transformed cross correlation of the transmitted signal;

   constructing (314), via the one or more hardware processors, a dictionary matrix by selecting a plurality of predefined delay-doppler values computed using a 2D complex exponential signal technique;

   estimating (316), via the one or more hardware processors, one or more sparse vectors by solving a sparse recovery problem using the dictionary matrix and the plurality of phase information, wherein an estimation algorithm is used for solving the sparse recovery problem; and

   estimating (318), via the one or more hardware processors, one or more paired delay-doppler bin shifts with respect to at least one of the one or more targets by identifying one or more non-zero values of the one or more sparse vectors.

2. The processor implemented method as claimed in claim 1, wherein,

the received at least one signal comprising the one or more pilot sequences and the one or more guard symbols is placed in the delay doppler domain frame as a plurality of row and column pilot structures,
the one or more communication data are placed in the M*N matrix after the one or more pilot sequences and the one or more guard symbols, and wherein
the at least one signal is transmitted from the one or more transmitters by converting the delay-Doppler domain frame to the delay-time domain frame by performing a signal modulation on the delay-Doppler domain frame and by adding a cyclic prefix to the at least one signal in the delay-time domain frame followed by a column-wise vectorization.

3. The processor implemented method as claimed in claim 2, wherein converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)} F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame, and $F_N$ is a $N$ dimensional Discrete Fourier Transform matrix.

4. The processor implemented method as claimed in claim 1, wherein the at least one signal from each of the one or more transmitters is distinguished by determining the cross correlation of the received at least one signal and the associated transmitted signal with the local version of the pilot sequence from each of the one or more transmitters, and is represented as:

$$\sum{}^{Y^{(r)}, p^{(t)}},$$

where, $Y^{(r)}$ is the received at least one signal at $r^{th}$ receiver in the delay-Doppler domain frame and $p^{(t)}$ is a transmitted pilot signal.

5. The processor implemented method as claimed in claim 1, wherein computing the plurality of phase information of the received at least one signal comprises of dividing the transformed cross correlation of the received at least one signal with the transformed cross correlation of an associated transmitted signal, and is represented as:

$$\sum{}_{u,v}^{Y(\tilde{r}), p(t)} = \sum_{l=1}^{L} \sum_{t=1}^{T} a_l\, e^{-j2\pi\left(\frac{u\tau_{l,bin}}{M_G} + \frac{v\mu_{l,bin}}{N}\right)} \sum{}_{u,v}^{X_{\tau,\mu}^{(\tilde{t})}, p(t)} + \tilde{\eta},$$

$$H_{u,v} = \sum_{l=1}^{L} \sum_{t=1}^{T} a_{\tau l,\mu_l}\, e^{-j2\pi\left(\frac{u\tau_{l,bin}}{M_G} + \frac{v\mu_{l,bin}}{N}\right)} + \tilde{\eta},$$

where, $Y(\tilde{r})$ is the 2D-FFT of the extracted received signal in delay doppler (DD) domain, $a_{\tau t,\mu_l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $H_{u,v}$ is the plurality of phase information, $\sum{}_{u,v}^{X_{\tau,\mu}^{(\tilde{t})}, p(t)}$ is the corelated signal between an extracted transmitted signal ($X_{\tau,\mu}^{(\tilde{t})}$) and ($p(t)$) the transmitted pilot signal, $\tilde{\eta}$ denotes a residual noise present in the received at least one signal, $M_G$ represents only those delay bins specific to pilot and guard symbols and $N$ denotes the number of doppler bins.

6. The processor implemented method as claimed in claim 1, wherein estimating the one or more zero values of the one or more sparse vectors by comparing the plurality of columns of a dictionary matrix with the plurality of phase information using the estimation algorithm and identifying the one or more non-zero value of the one or more sparse vectors as paired delay-doppler shifts associated to the one or more targets is represented as:

$$u_{\tilde{s}} \; = \; \min_{u_s} \lVert u_s \rVert_{l_1} \;\; such \; that \; \lVert h - \phi u_s \rVert_{l_2} < \epsilon,$$

where, $h$ is the vectorised version of $H$, $u_s$ is the sparse vector with $L$ significant values, $l_1$ is the $l_1$ norm, $l_2$ is the $l_2$ norm and $\varepsilon$ is the threshold used in the estimation algorithm.

7. A system (100), comprising:

one or more hardware processors (104);
a communication interface (106); and
a memory (102) storing a plurality of instructions, wherein the plurality of instructions cause the one or more hardware processors to:

receive at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data;
demodulate the at least one signal to obtain a delay Doppler domain frame;
extract the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets;
determine a cross correlation of the received at least one signal and associated transmitted signal by using the extracted one or more pilot sequences and a local version of a pilot sequence from each of the one or more transmitters;
transform the cross correlation of the received at least one signal and the associated transmitted signal to a frequency domain from the delay-doppler domain frame by performing a signal processing on the demodulated at least one signal, to obtain a transformed cross correlation of the received at least one signal and an associated transformed cross correlation of the transmitted signal;
compute a plurality of phase information of the received at least one signal using the transformed cross correlation of the received at least one signal and the associated transformed cross correlation of the transmitted signal;
construct a dictionary matrix by selecting a plurality of predefined delay-doppler values computed using a 2D complex exponential signal technique;
estimate one or more sparse vectors by solving a sparse recovery problem using the dictionary matrix and the plurality of phase information, wherein an estimation algorithm is used for solving the sparse recovery problem; and
estimate one or more paired delay-doppler bin shifts with respect to at least one of the one or more targets by identifying one or more non-zero values of the one or more sparse vectors.

8. The system as claimed in claim 7, wherein,

the received at least one signal comprising the one or more pilot sequences and the one or more guard symbols is placed in the delay doppler domain frame as a plurality of row and column pilot structures,
the one or more communication data are placed in the M*N matrix after the one or more pilot sequences and the one or more guard symbols, and wherein
the at least one signal is transmitted from the one or more transmitters by converting the delay-Doppler domain frame to the delay-time domain frame by performing a signal modulation on the delay-Doppler domain frame and by adding a cyclic prefix to the at least one signal in the delay-time domain frame followed by column-wise vectorization.

9. The system as claimed in claim 8, wherein the one or more hardware processors are configured for converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)}F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame and $F_N$ is a $N$ dimensional Discrete Fourier Transform matrix.

10. The system as claimed in claim 7, wherein the at least one signal from each of the one or more transmitters is distinguished by determining the cross correlation of the received at least one signal and the associated transmitted signal with the local version of the pilot sequence from each of the one or more transmitters, and is represented as:

$$\sum^{Y^{(r)},p^{(t)}},$$

where, $Y^{(r)}$ is the received at least one signal at $r^{th}$ receiver in the delay-Doppler domain frame and $p^{(t)}$ is a transmitted pilot signal.

11. The system as claimed in claim 7, wherein the one or more hardware processors are configured for computing the plurality of phase information of the received at least one signal comprises of dividing the transformed cross correlation of the received at least one signal with the transformed cross correlation of an associated transmitted signal, and is represented as:

$$\sum_{u,v}^{Y(r^\sim),p(t)} = \sum_{l=1}^{L}\sum_{t=1}^{T} a_l\, e^{-j2\pi\left(\frac{u\tau_{l,bin}}{M_G}+\frac{v\mu_{l,bin}}{N}\right)} \sum_{u,v}^{X_{\tau,\mu}^{(t^\sim)},p(t)} + \eta^\sim,$$

$$H_{u,v} = \sum_{l=1}^{L}\sum_{t=1}^{T} a_{\tau l,\mu_l}\, e^{-j2\pi\left(\frac{u\tau_{l,bin}}{M_G}+\frac{v\mu_{l,bin}}{N}\right)} + \eta^\sim,$$

where, $Y(r^\sim)$ is the 2D-FFT of the extracted received signal in delay doppler (DD) domain, $a_{\tau t,\mu l}$ is the path gain of $l^{th}$ path, $\mu_{l,bin}$ is the Doppler bin shift of the $l^{th}$ path, $\tau_{l,bin}$ is the delay bin shift of the $l^{th}$ path, $T$ being the number of transmitters and $L$ being the number of paths, $H_{u,v}$ is the plurality of phase information, $\sum_{u,v}^{X_{\tau,\mu}^{(t^\sim)},p(t)}$ is the corelated signal between an extracted transmitted signal ( $X_{\tau,\mu}^{(t^\sim)}$ ) and ($p(t)$) is the transmitted pilot signal, $\eta^\sim$ denotes a residual noise present in the received at least one signal, $M_G$ represents only those delay bins specific to pilot and guard symbols and $N$ denotes the number of doppler bins.

12. The system as claimed in claim 7, wherein the one or more hardware processors are configured for estimating the one or more zero values of the one or more sparse vectors by comparing the plurality of columns of a dictionary matrix with the plurality of phase information using the estimation algorithm and identifying the one or more non-zero value of the one or more sparse vectors as paired delay-doppler shifts associated to the one or more targets is represented as:

$$u_s^\sim = \min_{u_s}||u_s||_{l_1} \;\; such\; that \;\; ||h-\phi u_s||_{l_2} < \epsilon,$$

where, $h$ is the vectorised version of $H$, $u_s$ is the sparse vector with $L$ significant values, $l_1$ is the $l_1$ norm, $l_2$ is the $l_2$ norm and $\varepsilon$ is the threshold used in the estimation algorithm.

13. One or more non-transitory machine-readable information storage mediums comprising one or more instructions which when executed by one or more hardware processors cause:

receiving at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data;
demodulating the at least one signal to obtain a delay Doppler domain frame;

extracting the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets;

determining a cross correlation of the received at least one signal and an associated transmitted signal by using the extracted one or more pilot sequences and a local version of a pilot sequence from each of the one or more transmitters;

transforming the cross correlation of the received at least one signal and the associated transmitted signal to a frequency domain from the delay-doppler domain frame by performing a signal processing on the demodulated at least one signal, to obtain a transformed cross correlation of the received at least one signal and an associated transformed cross correlation of the transmitted signal;

computing a plurality of phase information of the received at least one signal using the transformed cross correlation of the received at least one signal and the associated transformed cross correlation of the transmitted signal;

constructing a dictionary matrix by selecting a plurality of pre-defined delay-doppler values computed using a 2D complex exponential signal technique;

estimating one or more sparse vectors by solving a sparse recovery problem using the dictionary matrix and the plurality of phase information, wherein an estimation algorithm is used for solving the sparse recovery problem; and

estimating one or more paired delay-doppler bin shifts with respect to at least one of the one or more targets by identifying one or more non-zero values of the one or more sparse vectors.

14. The one or more non-transitory machine readable information storage mediums in claim 13, wherein,

the received at least one signal comprising the one or more pilot sequences and the one or more guard symbols is placed in the delay doppler domain frame as a plurality of row and column pilot structures,

the one or more communication data are placed in the M*N matrix after the one or more pilot sequences and the one or more guard symbols, and wherein

the at least one signal is transmitted from the one or more transmitters by converting the delay-Doppler domain frame to the delay-time domain frame by performing a signal modulation on the delay-Doppler domain frame and by adding a cyclic prefix to the at least one signal in the delay-time domain frame followed by a column-wise vectorization.

15. The one or more non-transitory machine readable information storage mediums in claim 14, wherein converting the received at least one signal from the delay-time domain frame to the delay-doppler frame by removing the cyclic prefix from the received at least one signal and performing the signal demodulation on the received at least one signal for converting to the delay-doppler frame is represented as:

$$Y^{(r)} = R^{(r)} F_N,$$

where, $Y^{(r)}$ is the received at least one signal at $r^{th}$ receiver in the delay-Doppler domain frame, $R^{(r)}$ is the received at least one signal at the $r^{th}$ receiver in the delay-time domain frame, and $F_N$ is a $N$ dimensional Discrete Fourier Transform matrix.

SYSTEM
100

MEMORY
102

DATABASE
108

HARDWARE
PROCESSOR(S)
104

I/O INTERFACE(S)
106

FIG. 1

FIG. 2

300

receiving, via one or more hardware processors, at least one signal reflected from one or more targets in a delay-time domain frame at a radar receiver, wherein the received at least one signal comprises a M*N matrix, and wherein the M*N matrix comprises one or more pilot sequences, one or more guard symbols, and one or more communication data

302

demodulating, via the one or more hardware processors, the at least one signal to obtain a delay Doppler domain frame

304

extracting, via the one or more hardware processors, the one or more pilot sequences and the one or more guard symbols from the received at least one signal, wherein the one or more pilot sequences and the one or more guard symbols are known at the radar receiver and one or more transmitters from where the at least one signal is transmitted towards the one or more targets

306

determining, via the one or more hardware processors, a cross correlation of the received at least one signal and an associated transmitted signal by using the extracted one or more pilot sequences and a local version of a pilot sequence from each of the one or more transmitters

308

( A )

FIG. 3A

(A)

transforming, via the one or more hardware processors, the cross correlation of the received at least one signal and the associated transmitted signal to a frequency domain from the delay-doppler domain by performing a signal processing on the demodulated at least one signal, to obtain a transformed cross correlation of the received at least one signal and an associated transformed cross correlation of the transmitted signal — 310

computing, via the one or more hardware processors, a plurality of phase information of the received at least one signal using the transformed cross correlation of the received at least one signal and the associated transformed cross correlation of the transmitted signal — 312

constructing, via the one or more hardware processors, a dictionary matrix by selecting a plurality of pre-defined delay-doppler values computed using a 2D complex exponential signal technique — 314

estimating, via the one or more hardware processors, one or more sparse vectors by solving a sparse recovery problem using the dictionary matrix and the plurality of phase information, wherein an estimation algorithm is used for solving the sparse recovery problem — 316

estimating, via the one or more hardware processors, one or more paired delay-doppler bin shifts with respect to at least one of the one or more targets by identifying one or more non-zero values of the one or more sparse vectors — 318

FIG. 3B

# EUROPEAN SEARCH REPORT

**Application Number**

EP 25 20 2941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 047 503 A (UNIV NANJING INFORMATION SCIENCE & TECH) 2 May 2023 (2023-05-02) * paragraphs [0118] - [0268] * ----- | 1-15 | INV.<br>G01S7/00<br>G01S7/288<br>G01S7/41 |
| A | ZACHARIA OLIVIA ET AL: "Super-Resolution Sensing of User Equipment Using Delay-Doppler Pilot-Data Structure in RIS-Aided OTFS Systems", 2024 IEEE INTERNATIONAL CONFERENCE ON ACOUSTICS, SPEECH, AND SIGNAL PROCESSING WORKSHOPS (ICASSPW), IEEE, 14 April 2024 (2024-04-14), pages 805-809, XP034669634, DOI: 10.1109/ICASSPW62465.2024.10626649 [retrieved on 2024-08-15] * Sections 2 - 4 * ----- | 1-15 | G01S13/00<br>G01S13/50<br>G01S13/76<br><br>ADD.<br>G01S13/931 |
| A | ZHOU LEI ET AL: "Joint Target Detection and Channel Estimation for Distributed Massive MIMO ISAC Systems", IEEE TRANSACTIONS ON COGNITIVE COMMUNICATIONS AND NETWORKING, IEEE, USA, vol. 11, no. 1, 13 June 2024 (2024-06-13), pages 300-315, XP011997523, DOI: 10.1109/TCCN.2024.3414577 [retrieved on 2024-06-14] * Section II * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 9 February 2026 | Reeck, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 2941

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2026

| Patent document cited in search report | Publication date | Patent family member(s) | Publication date |
|---|---|---|---|
| CN 116047503 A | 02-05-2023 | NONE | |

EPO FORM P0459

For more details about this annex : see Official Journal of the European Patent Office, No. 12/82

**EP 4 737 934 A1**

**REFERENCES CITED IN THE DESCRIPTION**

**Patent documents cited in the description**

- IN 202421083424